# EUROPEAN PATENT APPLICATION

(11) **EP 2 072 250 A1**
(43) Date of publication of application: **24.06.2009**
(21) Application number: 08253360.5
(22) Date of filing: 16.10.2008
(51) Int. Cl.: B32B 27/12, B32B 27/02, B32B 9/02, B32B 1/00

(54) **Waterproof molded article**

(30) Priority: 20.12.2007 CN 200710203286
(71) Applicant: FIH (Hong Kong) Limited, Hong Kong (HK)
(72) Inventor: Wu, Kun-Tsan, Shindian City Taipei Hsien 231 (TW); Tien, Li-Wen, Shindian City Taipei Hsien 231 (TW)
(74) Representative: Craven, Ian

(57) **Abstract**

A waterproof molded article (100) is provided. The waterproof molded article includes a base shell (10), a soft layer (20) directly formed on the base shell, and a waterproof layer (30) being resilient and transparent. The waterproof layer is directly formed on the soft layer. The soft layer is disposed between the base shell and the waterproof layer.

## Description

### BACKGROUND OF THE INVENTION

### 1. Fiend of the Invention

The present invention relates to molded articles, particularly to a waterproof molded article.

### 2. Description of Prior Art

Molded articles, such as molded shells, are widely used in many technological fields. One example is a molded shell used with a portable electronic device (e.g., a mobile phone) for shielding internal electronic components. Another example is a molded shell used with a furniture (e.g., a mini sofa) to provide decoration.

Typically, the molded shell used for the portable electronic device is a plastic article molded by a typical insert molding process. In order to achieve a good tactility, the exterior surface of the molded shell usually has a soft layer formed thereof. The soft layer is typically made of one material selected from a leather material and a fabric material. The soft layer is typically adhered on the exterior surface by adhesive or hot-melt glue films.

However, the soft layer using the leather material or the fabric material tends to be badly influenced (e.g., eroded) by water/liquid vapor. Thereby, the soft layer may be harden or easily broken.

Therefore, a heretofore-unaddressed need exists in the art to address the aforementioned deficiencies and inadequacies.

### SUMMARY OF THE INVENTION

In one embodiment thereof, a waterproof molded article is provided. The waterproof molded article includes a base shell, a soft layer directly formed on the base shell, and a waterproof layer being resilient and transparent. The waterproof layer is directly formed on the soft layer. The soft layer is disposed between the base shell and the waterproof layer.

Other advantages and novel features will become more apparent from the following detailed description when taken in conjunction with the accompanying drawings.

### BRIEF DESCRIPTION OF THE DRAWINGS

Many aspects of the present waterproof molded article can be better understood with reference to the following drawing. This drawing is not necessarily drawn to scale, the emphasis instead being placed upon clearly illustrating the principles of the present waterproof molded article. Moreover, in the drawing like reference numerals designate corresponding parts throughout the view. Wherever possible, the same reference numbers are used throughout the drawing to refer to the same or like elements of an embodiment.

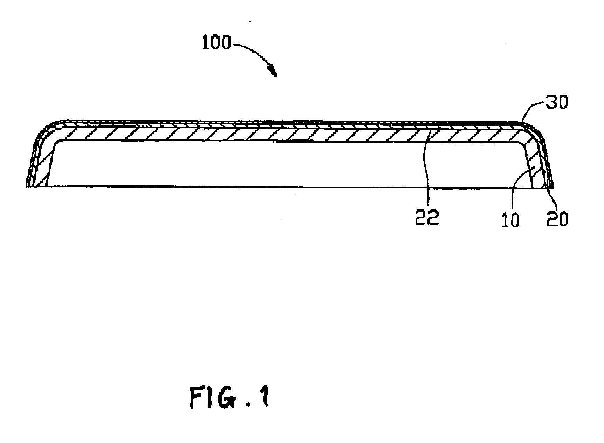

FIG. 1 is a cross-sectional view of a waterproof molded article according with a present embodiment.

### DETAILED DESCRIPTION OF THE INVENTION

The present molded article is exemplified by a molded shell, which is described here in conjunction with the accompanying drawing in FIG. 1. The molded shell is suitably used in portable electronic device such as the mobile phone, the personal digital handset, or the like,

Referring to FIG. 1, in detail, the molded shell 100 includes a base shell 10,a soft layer 20 and a waterproof layer 30 formed on the base shell 10, The soft layer 20 is disposed between the base shell 10 and the waterproof layer 30.

The base shell 10 can be molded by injection mold. The material for the base shell 10 can be injecting materials such as plastic materials, rubber materials, silicon materials, and so on. The plastic materials may be one or more materials selected from a group consisting of a polyvinyl chloride (PVC), an acryloaitrile-butadiene-styreue (ABS), a polycarbonate (PC), a polystyrene, a polypropylene, and a polyurethane. Beneficially, the plastic material can be the ABS material or the PC material.

The soft layer 20 may be made of materials selected from a leather material, a fabric material, or a cloth material, e.g., a natural leather material, a man-made leather material, a cotton fabric material, a wool fabric material, a plastic fabric material, or a nylon material, Beneficially, the soft layer 20 can be made of one of a man-made leather material, cotton fabric material, and a nylon material.

The soft layer 20 has an exterior joining surface 22 joining with a corresponding exterior surface (not labeled) of the base shell 10. The joining surface 22 has a plurality of capillary structures (not shown) structured and/or arranged therewith, which appears to be rough. Originally, the soft layer 20 made of the cotton fabric material is rough, However, if the soft layer 20 is made of the man-made leather material, which is not be rough in the original state, the soft layer 20 requires to be surface treated (e.g., grinded) to achieve a rough surface.

The waterproof layer 30 is a resilient transparent layer and made of one of a polyvinyl acetate (i.e., PVA) material, a polystyrene material, a PVC material, a polysulphide material, and an organosiliconpolymer material. The waterproof layer 30 can be formed on the soft layer 20 by such steps as follows. The soft layer 20 is immerged into a chemical solution for a certain period. The chemical solution contains waterproof materials for the soft layer 20. After such period, the soft layer 20 is taken out from the solution and dried in the air. Thus, the waterproof layer 30 is directly formed on the soft layer 20.

In manufacturing of the molded shell 100, after the present step to form the waterproof layer 30 on the soft layer 20, the base shell 10 is integrally formed with the waterproof layer 30 combined with the soft layer 20. In doing that, a typical insert molding decorating (IMD) technology is implemented to insert mold the base shell 10 with the two layers 20 and 30.

It is to be understood that an alternative manufacturing method can be implemented for attaining such molded shell 100. The base shell 10 is insert molded with the soft layer 20 by a typical IMD (technology. The waterproof layer 30 is directly formed on an exterior surface of the soft layer 20 by such means as heat pressing, or the like, instead of the present immerging and then drying means.

One main advantage of the present embodiment embodies that the molded shell 100 can be provided with leather or fabric appearance and tacitly via using the soft layer 20 therewith. Such appearance and tacitly can be protected and maintained by the waterproof layer 30 from being badly influenced (e.g., eroded) by water/liquid vapor.

It is to be understood, however, that even through numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A waterproof molded article, comprising:
a base shell;
a soft layer directly formed on the base shell; and
a waterproof layer being resilient and transparent and directly formed on the soft layer, the soft layer being disposed between the base shell and the waterproof layer.

2. The waterproof molded article as claimed in claim 1, wherein the waterproof layer is made of one of a polyvinyl acetate material, a polystyrene material, a polyvinyl chloride material, a polysulphide material, and an organosiliconpolymer material.

3. The waterproof molded article as claimed in claim 1, wherein the soft layer is made of one of a leather material, a fabric material, and a cloth material,

4. The waterproof molded article as claimed in claim 3, wherein the soft layer is made of one material selected from a group consisting of a natural leather material, a man-made leather material, a cotton fabric material, a wool fabric material, a plastic fabric material, and a nylon material.

5. The waterproof molded article as claimed in claim 4, wherein the soft layer comprises a joining surface, the joining surface configured for being rough so as to join with the exterior surface of the base shell.

6. The waterproof molded article as claimed in claim 5, wherein the joining surface is originally or surface treated to be rough.

7. The waterproof molded article as claimed in claim 6, wherein the joining surface is originally rough as the soft layer is made of a cotton fabric material.

8. The waterproof molded article as claimed in claim 6, wherein the joining surface is surface treated to be rough as the soft layer is made of a man-made leather material.

9. The waterproof molded article as claimed in claim 6, wherein the joining surface is provided with a plurality of capillary structures.

10. The waterproof molded article as claimed in claim 1, wherein the base shell is made of one of a plastic material, a rubber material, and a silicon material.
